# EUROPEAN PATENT APPLICATION

(11) **EP 4 596 382 A1**
(43) Date of publication of application: **06.08.2025**
(21) Application number: 24164055.6
(22) Date of filing: 18.03.2024
(51) Int. Cl.: B62K 3/00, B62K 5/02, B62K 5/10

(54) **COUPLING MECHANISM AND ELECTRIC THREE-WHEELED SCOOTER WITH THE COUPLING MECHANISM**

(30) Priority: 05.02.2024 TW 113104471
(71) Applicant: Li Yuan Transmission Co., Ltd., Nantou County, Taiwan 54248 (TW)
(72) Inventor: KO, KENG-YU, Nantou County, Taiwan (TW); CHEN, KUAN-KUEI, Nantou County, Taiwan (TW)
(74) Representative: Rapisardi, Mariacristina

(57) **Abstract**

A coupling mechanism includes a base(1), an end used to pivot to a rear end of a frame(F), a housing(2), combined and fixed in the base(1), and a linkage module(3), having two linkage gear sets(31) and two driven gear sets(32). Each linkage gear set(31) has a first shaft rod(311) connected with a first bevel gear(312), and each driven gear set(32) has a second shaft rod(321) connected with a second bevel gear(322). The two first bevel gears(312) and the two second bevel gears(322) are all located in the housing(2). Each of the first bevel gears(312) simultaneously meshes the two second bevel gears(322), so that the two first bevel gears(312) rotate in opposite directions. The two first shaft rods(311) respectively penetrate out of the base(1) toward two sides, and connect with one swing arm(33), and the two second shaft rods(321) are respectively combined with the housing(2)..

## Description

### BACKGROUND OF THE INVENTION

### 1. Field of the Invention

The present disclosure relates to a coupling mechanism of a vehicle, in particular to a coupling mechanism between two rear wheels and an electric three-wheeled scooter with the coupling mechanism.

### 2. Description of the Related Art

The two wheels facing each other of the common traditional three-wheeled scooters mostly use respective lifting and suspension systems. When the vehicle is cornering, the three tires and the frame of the traditional three-wheeled scooter are all inclined relative to the ground, and when driving on uneven roads, the two wheels facing each other can individually move up and down relative to the frame in response to the type of road surface.

### BRIEF SUMMARY OF THE INVENTION

However, the traditional three-wheeled scooter still often fails to retain contact with the ground at all times when cornering or traveling on uneven roads because the two wheels facing each other individually move up and down, resulting in an overturning accident caused by a situation that a single wheel is not firmly on the ground and the center of gravity of the vehicle is unstable.

In view of the above shortcoming, the present invention provides a coupling mechanism in which the two wheels facing each other can retain contact with the ground during driving to ensure that the two wheels can provide good grip.

The present disclosure defines the Y direction as the forward and backward directions, the X direction as the left and right directions, and the Z direction as the upper (top) and lower (bottom) directions according to the driving direction of the vehicle. In addition, the directionality or similar terms thereof described in the full text of the present disclosure, such as "inside", "outside", "side" are mainly with reference to the direction of the attached drawings, and each directionality or similar terms thereof are only used to assist in explaining and understanding the embodiments of the present disclosure, and are not used to limit the present disclosure.

The use of the quantifier "a" or "one" in the elements and components described in the full text of the present disclosure is only for convenience of use and to provide a common meaning of the scope of the present disclosure. In the present disclosure, it should be construed to include one or at least one, and a singular concept also includes the plural case, unless it is expressly intended to mean something else. In addition, unless expressly described to the contrary, the word "comprising" will be understood to mean the inclusion of stated elements, but not the exclusion of any other elements.

The similar terms such as "combine", "fit together", or "assemble" mentioned in the full text of the present disclosure mainly include the forms in which the components can be separated without destroying after being connected, or the components are inseparable after being connected, etc., which can be selected by a person having ordinary knowledge in the art according to the material or assembly requirements of the components to be connected.

To achieve the above objective and other objectives, the present disclosure provides a coupling mechanism, including: a base, an end used to pivot to a rear end of a frame; a housing, combined and fixed in the base; and a linkage module, having two linkage gear sets and two driven gear sets, each linkage gear set has a first shaft rod connected with a first bevel gear, and each driven gear set has a second shaft rod connected with a second bevel gear, the two first bevel gears and the two second bevel gears are all located in the housing, each of the first bevel gears simultaneously meshes the two second bevel gears, so that the two first bevel gears rotate in opposite directions, the two first shaft rods respectively penetrate out of the base toward two sides, and connect one swing arm, and the two second shaft rods are respectively combined with the housing.

The present disclosure also provides an electric three-wheeled scooter, which includes: a frame, a front end being assembled and combined with a front wheel; and the coupling mechanism as described above, a front end of the base being pivoted to the rear end of the frame, and two rear wheels are respectively assembled and combined with the two swing arms.

In the above coupling mechanism, the linkage gear set may have a bearing seat, and the bearing seat may be combined with the base and/or the housing, and the first shaft rod may penetrate and combine with the bearing seat.

In the above coupling mechanism, the first shaft rod may have a combining portion, the linkage gear set may have an adapter seat combined with the combining portion, and the swing arm may combine with the adapter seat.

In the above coupling mechanism, the first shaft rod may be combined with the first bevel gear by a clamping portion, or the first shaft rod may be integrally formed and connected with the first bevel gear, so that the first shaft rod and the first bevel gear retain the same movement.

In the above coupling mechanism, the base may have a reinforcing piece, and the reinforcing piece may extend and combine with the housing.

In the above coupling mechanism, a top of the housing may be open and covered with a detachable cover, the second shaft rod of the driven gear set positioned at the top of the housing may penetrate and combine to a parking clamping member, and the parking clamping member may have three convex portions that are arranged at intervals, two stopping members may be located in the housing, and are respectively positioned between any two adjacent convex portions. After the second shaft rod drives the parking clamping member to rotate, one of the convex portions of the parking clamping member can be abutted to one of the stopping members.

In the above coupling mechanism, the driven gear set positioned at the top of the housing may have a bearing, the bearing may be combined in the housing, and the second shaft rod may penetrate and combine with the bearing.

In the above coupling mechanism, the second shaft rod of the driven gear set positioned at the top of the housing may be combined with the second bevel gear by a clamping portion, or the second shaft rod may be integrally formed and connected with the second bevel gear, so that the second shaft rod and the second bevel gear retain the same movement.

In the above coupling mechanism, the driven gear set positioned at the top of the housing may have a dust jacket, and the second shaft rod may penetrate through the dust jacket, and the dust jacket may be abutted to a ring periphery of the second shaft rod and may be located between the bearing and the parking clamping member.

In the above coupling mechanism, the top of the housing may have a locking pawl and a fixing pin, the locking pawl may be pivoted to the housing, and two ends of the locking pawl may respectively have a hook portion and a positioning portion, and the parking clamping member may have a concave portion located between the two adjacent convex portions. When an outer edge of the locking pawl is abutted to the fixing pin, the hook portion of the locking pawl may not extend into a pivoting range of the parking clamping member. When the fixing pin is combined with the positioning portion of the locking pawl, the hook portion of the locking pawl may penetrate into the concave portion of the parking clamping member.

Accordingly, the coupling mechanism and the electric three-wheeled scooter having the coupling mechanism of the present disclosure can make the two rear wheels linked with each other to produce opposite actions and the same swing amplitude by the linkage module, so as to improve the stability of the vehicle when traveling, achieve the effects such as improving riding comfort and safety.

### BRIEF DESCRIPTION OF THE DRAWINGS

FIG. 1 is a schematic partial perspective view of an electric three-wheeled scooter of an embodiment of the present disclosure.
FIG. 2 is a schematic partial enlarged view of FIG. 1.
FIG. 3 is a schematic partial sectional perspective view of a coupling mechanism of an embodiment of the present disclosure.
FIG. 4 is a schematic sectional view of a coupling mechanism in a first direction of an embodiment of the present disclosure.
FIG. 5 is a schematic sectional view of a coupling mechanism in a second direction of an embodiment of the present disclosure.
FIG. 6 is a schematic rear view when the electric three-wheeled scooter is in an upright state of an embodiment of the present disclosure.
FIG. 7 is a schematic rear view when the electric three-wheeled scooter is in a rollover state of an embodiment of the present disclosure.
FIG. 8 is a schematic rear view when the electric three-wheeled scooter is in a state that a single wheel is lifted off the ground of an embodiment of the present disclosure.
FIG. 9 is a schematic partial enlarged view of the electric three-wheeled scooter of an embodiment of the present disclosure.
FIG. 10 is a schematic sectional view of the coupling mechanism in the first direction of an embodiment of the present disclosure.
FIG. 11 is a schematic partial sectional perspective view of the coupling mechanism of an embodiment of the present disclosure.
FIG. 12 is a schematic top view when the coupling mechanism is in an unlocked state of an embodiment of the present disclosure.
FIG. 13 is a schematic top view after a parking clamping member in FIG. 12 is rotated.
FIG. 14 is a schematic top view when the coupling mechanism is in a locked state of an embodiment of the present disclosure.

### DETAILED DESCRIPTION OF THE INVENTION

To facilitate understanding of the purpose, characteristics, and effects of the present disclosure, embodiments together with the attached drawings for the detailed description of the present disclosure are provided as below.

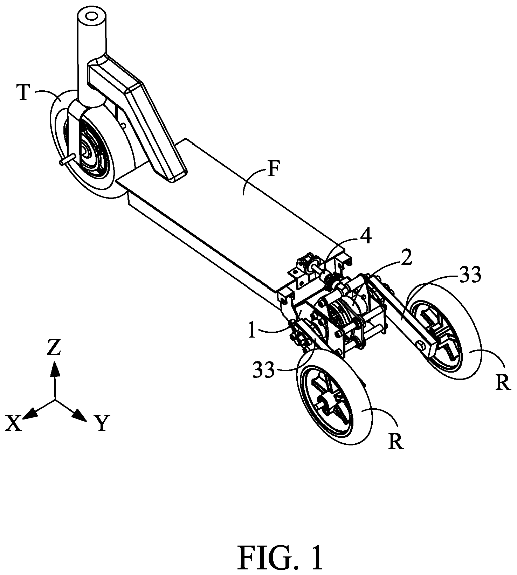

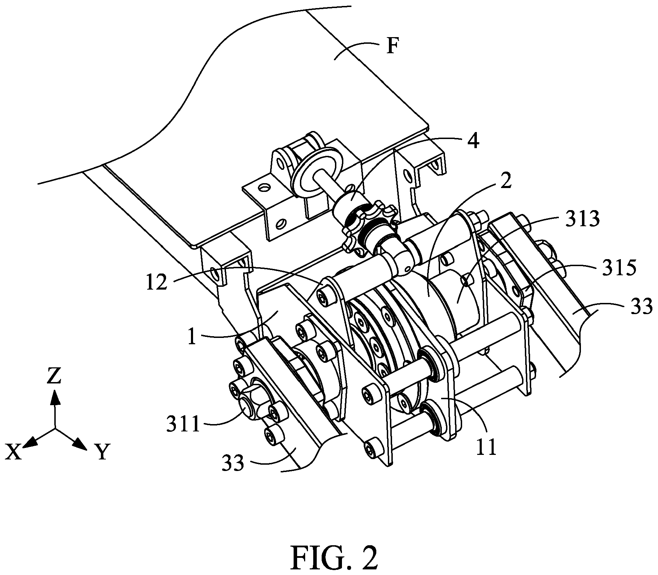

Referring to FIG. 1 and FIG. 2, they relate to a coupling mechanism of an embodiment of the present disclosure, which includes a base 1, a housing 2, and a linkage module 3, the housing 2 is combined and fixed in the base 1, and some components of the linkage module 3 are located in the housing 2. Among them, the present embodiment takes an electric three-wheeled scooter as an example to illustrate, but is not limited thereto. Namely, the coupling mechanism may also be applied to other types of vehicles, such as tricycles.

The base 1 is connected with a frame F, and can be assembled and combined with two rear wheels R. A front end of the frame F is assembled and combined with a front wheel T. In the present embodiment, the base 1 may, for example, but not be limited to a frame body that is approximately in the shape of an inverted U, and may be pivoted below a rear end of the frame F by a front end of the base 1, so that a rear end of the base 1 can be lifted or lowered with respect to the frame F to conform to the lifting or lowering action of the two rear wheels R (described in detail later).

The housing 2 is combined and fixed in the base 1; that is, the housing 2 is fixed in a preset position in the base 1 and does not displace or rotate with respect to the base 1. In addition, the present disclosure does not limit the type of the housing 2, but is based on the principle that the inside of the housing 2 can accommodate some components of the linkage module 3, and the appearance of the housing 2 can be different according to the spatial configuration requirements of other components, so it is not limited to the circular housing disclosed in the figure of the present embodiment.

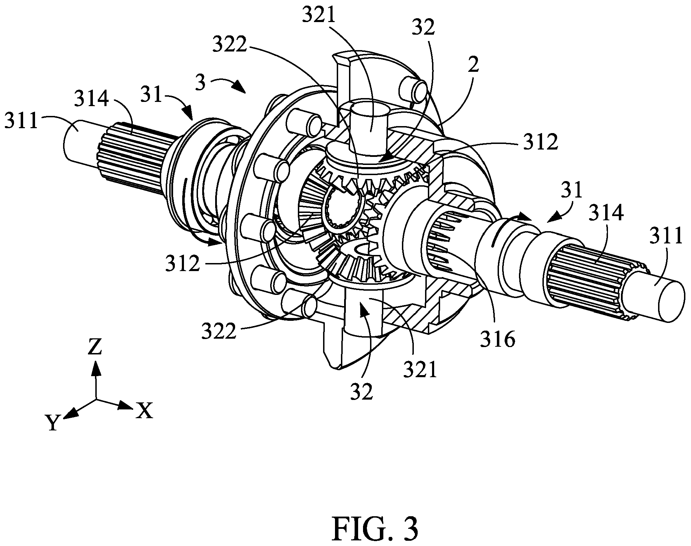

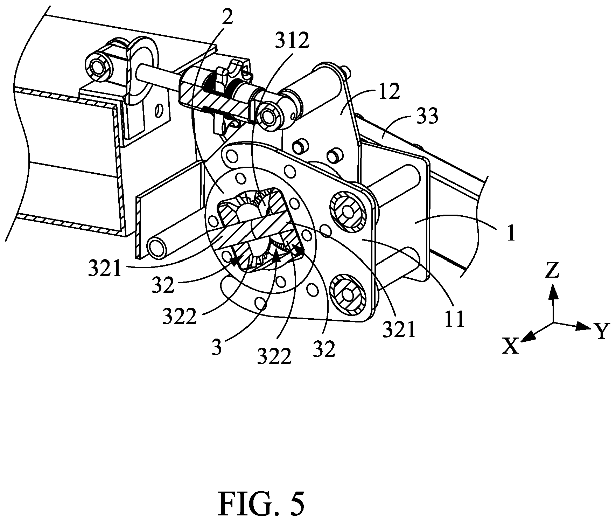

Referring to FIG. 3 to FIG. 5, the linkage module 3 has two linkage gear sets 31 and two driven gear sets 32. Among them, each linkage gear set 31 has a first shaft rod 311 connected with a first bevel gear 312, and each driven gear set 32 has a second shaft rod 321 connected with a second bevel gear 322.

The two first bevel gears 312 and the two second bevel gears 322 are all located in the housing 2. The two linkage gear sets 31 may be coaxially arranged (for example, it is coaxially arranged along the X direction), and the two driven gear sets 32 may also be coaxially arranged. Each of the first bevel gears 312 simultaneously meshes the two second bevel gears 322, so that when one of the first bevel gears 312 rotates, the two second bevel gears 322 can be linked to rotate, and thus the other first bevel gear 312 rotates in the opposite direction of the first bevel gear 312; that is, the two first bevel gears 312 will rotate in opposite directions.

Referring to FIG. 2, FIG. 4, and FIG. 5, one of the first shaft rods 311 penetrates out of the base 1 to one side in the X direction, and connects one swing arm 33. The other first shaft rod 311 then penetrates out of the base 1 to the other side in the X direction, and connects the other swing arm 33, and the two swing arms 33 are respectively provided for pivoting the two rear wheels R. The two second shaft rods 321 are respectively directly or indirectly combined with the housing 2, and the second bevel gear 322 can rotate with respect to the second shaft rod 321. Alternatively, in other embodiments, the two second shaft rods 321 may also be a pin that is connected into an integral part to help improve the stability of the two second bevel gears 322 when rotating.

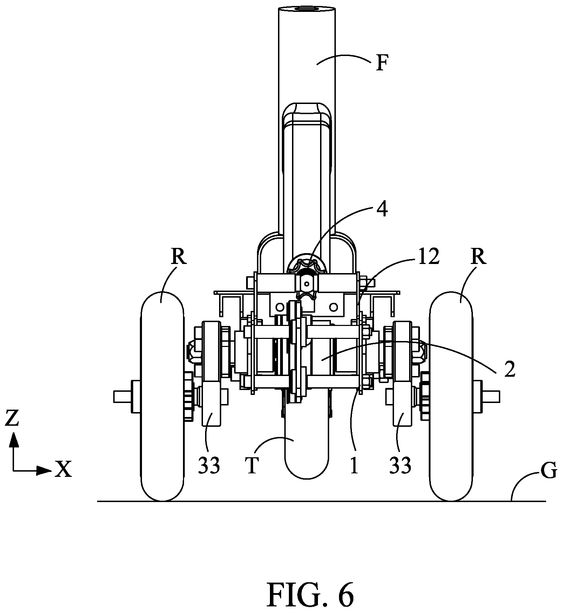

Referring to FIG. 1, FIG. 4, and FIG. 6, according to the above-mentioned structure, when the electric three-wheeled scooter assembled with the coupling mechanism of the present embodiment is in an upright state, its frame F and two rear wheels R are all roughly not inclined with respect to the ground G. At this time, the axial direction (X direction) of the two linkage gear sets 31 of the linkage module 3 can be approximately horizontal.

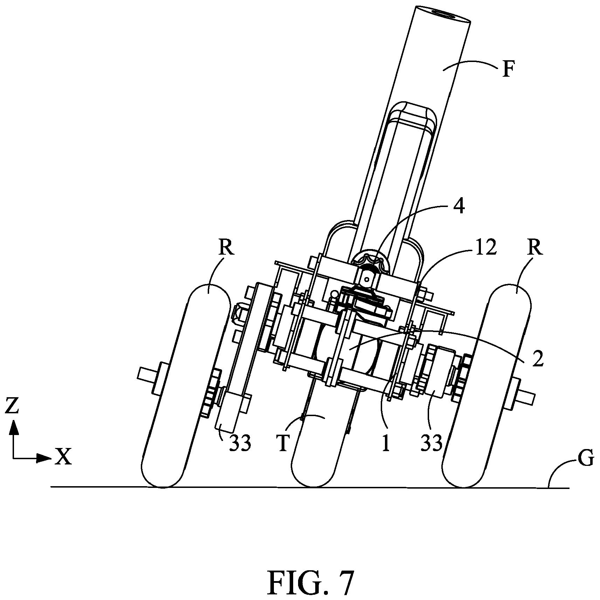

Referring to FIG. 3, FIG. 4, and FIG. 7, when the rider controls the roll of the electric three-wheeled scooter when cornering, taking the right roll as an example, the rider's force leaning to the right side can make the rear wheel R at the right side receive downward pressure, and the ground G relatively provides a lifting force to the rear wheel R at the right side. Therefore, the force of ground G acting on the rear wheel R at the right side can make the rear wheel R at the right side move upward with respect to the frame F to lift the swing arm 33 located at the right side of the base 1, so that the first shaft rod 311 and the first bevel gear 312 of the linkage gear set 31 at the right side rotate synchronously, and the two driven gear sets 32 are linked, the linkage gear set 31 at the left side rotates in the opposite direction to cause the swing arm 33 located at the left side of the base 1 and the rear wheel R that it is connected with to produce a descending motion with respect to the frame F. Therefore, when the electric three-wheeled scooter is in the rollover state, its frame F and two rear wheels R are inclined with respect to the ground G; that is, the two rear wheels R will move up and down with respect to the frame F without being tilted. At this time, the axial direction (X direction) of the two linkage gear sets 31 of the linkage module 3 can be inclined with respect to the ground G.

In short, the coupling mechanism of the present embodiment can be controlled by one of the two linkage gear sets 31 to control the other to carry out reverse rotation synchronously, so the lifting amplitude of the rear wheel R at the right side will be the same as the descending amplitude of the rear wheel R at the left side (vice versa), so as to ensure that the two rear wheels R can retain contact with the ground G in the process of driving, ensure that the two rear wheels R can provide good grip, and the situation that a single wheel is lifted off of the ground will not occur, and the stability of the electric three-wheeled scooter when traveling can be effectively improved, it also reduces the chance of the vehicle overturning because of unstable center of gravity when cornering at higher speeds.

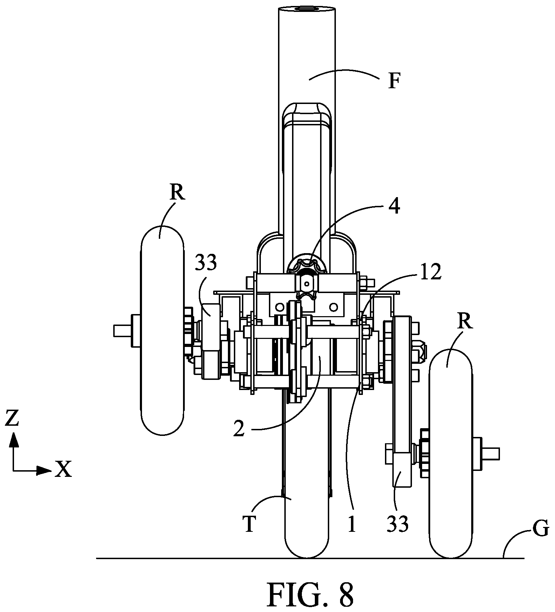

Similarly, referring to FIG. 3 and FIG. 8, in the case of the electric three-wheeled scooter driving on uneven roads, when one of the rear wheels R is lifted caused by a bump in the ground G (not shown in the figure), the other rear wheel R can also perform the opposite action and generate downforce; taking the rear wheel R at the left side being lifted by the bump in the ground G as an example, the reaction force provided by the ground G to the rear wheel R at the right side can create the effect of lifting the rear wheel R at the right side, so that a force is provided to the rear wheel R at the left side to suppress its lifting through the two linkage gear sets 31 of the linkage module 3. Therefore, the two rear wheels R can also retain contact with the ground G during the process of driving through uneven roads, and can reduce the bouncing effect of the electric three-wheeled scooter caused by uneven roads, and improve the riding comfort. When one of the rear wheels R descends because of passing through a dip in the ground, the situation is opposite to the above and will not be described in detail herein.

It is worth mentioning that the electric three-wheeled scooter may be driven by the front wheel T, or may also be driven by the two rear wheels R individually, and the present disclosure is not limited thereto. In addition, this linkage module 3 is not a mechanism for transmitting power, but when the vehicle encounters terrain changes when traveling, the two rear wheels R can be linked with each other to produce opposite actions and the same swing amplitude, so as to improve the stability of the vehicle when traveling, and achieve the effects such as improving riding comfort and safety.

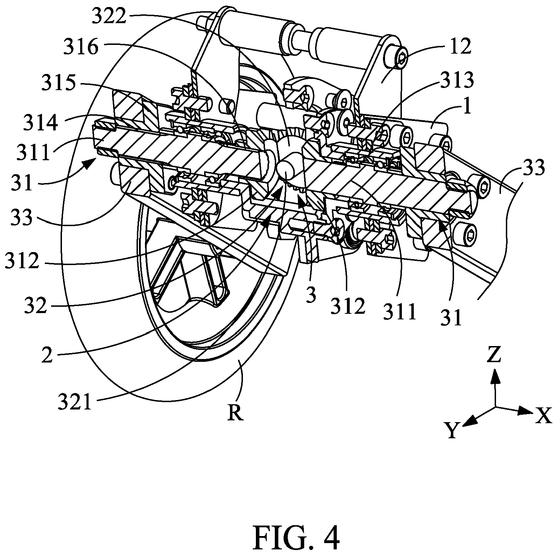

Referring to FIG. 2 and FIG. 4, in addition to the above embodiments, in an embodiment of the present disclosure, the linkage gear set 31 may also have a bearing seat 313, and the bearing seat 313 is combined with the base 1 and/or the housing 2. In an embodiment, the bearing seat 313 is selected to be combined with the base 1 and abutted to the housing 2, but is not limited thereto. The first shaft rod 311 then penetrates and combines the bearing seat 313, so that it can rotate smoothly with respect to the base 1. In this way, the linkage gear set 31 of the present disclosure ensures that the first shaft rod 311 can rotate smoothly and has high axial stability by a simple structure.

Referring to FIG. 2 to FIG. 4, in addition to the above embodiments, in an embodiment of the present disclosure, the first shaft rod 311 may be provided with a combining portion 314, the linkage gear set 31 may have an adapter seat 315 combined with the combining portion 314, and the swing arm 33 may directly or indirectly combine with the adapter seat 315, so that the first shaft rod 311 and the swing arm 33 can be linked and rotated with each other. For example, the combining portion 314 may be, for example, but not limited to, a splined structure, and an inner periphery of the adapter seat 315 may also be provided with a corresponding structure, so that the two can be combined with each other and rotate in linkage. In this way, the linkage gear set 31 of the present disclosure can make the corresponding first shaft rod 311 and the swing arm 33 linked with each other to produce rotation by a simple structure, so that the linkage gear set 31 at the other side can produce opposite actions and the same swing amplitude, and has the effects such as easy manufacturing, assembly, and smooth operation.

Referring to FIG. 3 and FIG. 4, in addition to the above embodiments, in an embodiment of the present disclosure, the first shaft rod 311 can be integrally formed and connected with the first bevel gear 312. Alternatively, the first shaft rod 311 is provided with a clamping portion 316 to directly or indirectly clamp and combine with the first bevel gear 312, so that the two retain the same movement. For example, the clamping portion 316 may, for example, but is not limited to a structure such as a key block or a spline, and an inner periphery of the first bevel gear 312 is also provided with a corresponding structure so that the two can be clamped and combined with each other and rotate in linkage. In this way, the linkage gear set 31 of the present disclosure can have a simple structure, and is easy to manufacture and assemble.

Referring to FIG. 2, in addition to the above embodiments, in an embodiment of the present disclosure, the base 1 may also have a reinforcing piece 11, and the reinforcing piece 11 extends and combines with the housing 2. In this way, the base 1 of the present embodiment can improve the supporting stability of the housing 2.

Referring to FIG. 2, in addition to the above embodiments, in an embodiment of the present disclosure, the coupling mechanism may further include a shock absorber 4, one end of the shock absorber 4 may be pivoted to an extension bracket 12 of the base 1, and the other end thereof may be pivoted to the rear end of the frame F. The shock absorber 4 can adjust the preload to suit different riding needs and improve riding comfort.

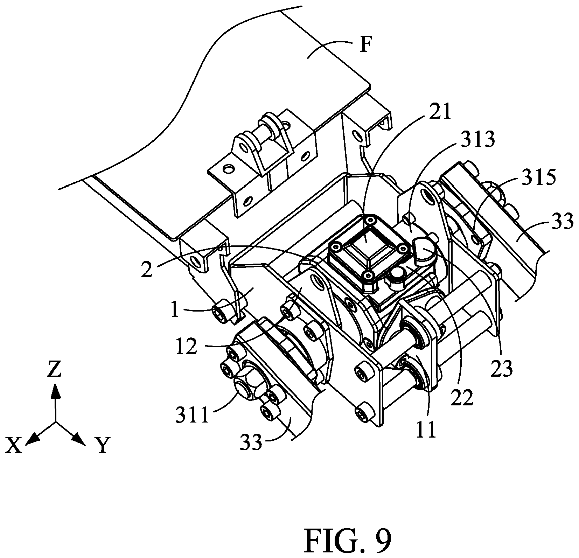

Referring to FIG. 9 to FIG. 12 that relate to the coupling mechanism of an embodiment of the present disclosure. The present embodiment is roughly the same as the previous embodiment, and the main difference is that the coupling mechanism of the present embodiment also has a limiting function.

In detail, the housing 2 of the present embodiment may be approximately a square housing body, and the top is open and covered with a detachable cover 21. The second shaft rod 321 of the driven gear set 32 positioned at the top of the housing 2 may penetrate and combine a parking clamping member 323, and an outer ring periphery of the parking clamping member 323 may have three convex portions 3231 that are arranged at intervals. Two stopping members 324 are located in the housing 2, and are respectively positioned between any two adjacent convex portions 3231. The stopping member 324 may be, for example, but is not limited to a rubber column.

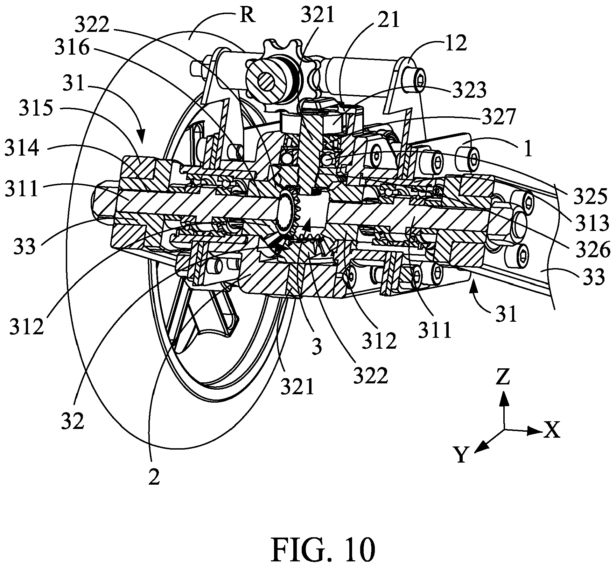

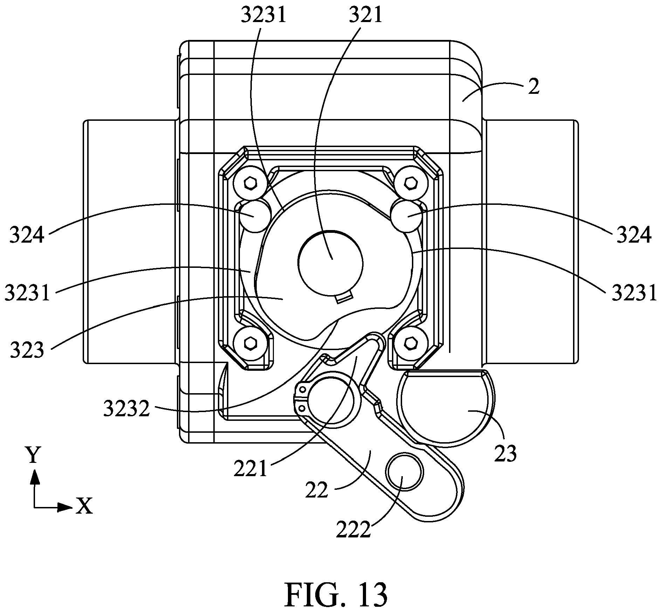

Accordingly, referring to FIG. 10 and FIG. 13, when the vehicle rolls, the second shaft rod 321 of the driven gear set 32 positioned at the top of the housing 2 can be subjected to the linkage of the second bevel gear 322 to be rotated. When the second shaft rod 321 drives the parking clamping member 323 to rotate by a predetermined amplitude, one of the convex portions 3231 of the parking clamping member 323 can be abutted to one of the stopping members 324, and can cause the stopping members 324 to produce elastic deformation, so that the stopping member 324 limits the amplitude of the rotation of the parking clamping member 323, the second shaft rod 321, and the second bevel gear 322 and provides a buffering effect, so as to achieve the limiting effect of limiting the swing amplitude of the two linkage gear sets 31.

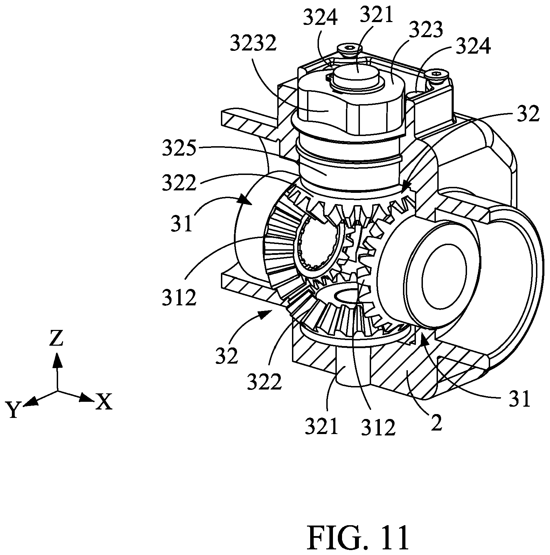

Referring to FIG. 10 and FIG. 11, in addition to the above embodiments, in an embodiment of the present disclosure, the driven gear set 32 positioned at the top of the housing 2 may have a bearing 325, the bearing 325 is combined in the housing 2, and the second shaft rod 321 penetrates and combines with the bearing 325, so that it can rotate smoothly with respect to the housing 2. The second shaft rod 321 may be integrally formed and connected with the second bevel gear 322; alternatively, the second shaft rod 321 is provided with a clamping portion 326 to directly or indirectly clamp and combine with the second bevel gear 322, so that the two retain the same movement. For example, the clamping portion 326 may, for example, but is not limited to a structure such as a key block or a spline, and an inner periphery of the second bevel gear 322 is also provided with a corresponding structure so that the two can be clamped and combined with each other and rotate in linkage. In this way, the driven gear set 32 of the present embodiment can have a simple structure, and is easy to manufacture and assemble.

In addition to the above embodiments, in an embodiment of the present disclosure, the driven gear set 32 positioned at the top of the housing 2 may have a dust jacket 327, and the second shaft rod 321 penetrates through the dust jacket 327, the inner edge of the dust jacket 327 may be abutted to a ring periphery of the second shaft rod 321, and the dust jacket 327 may be located between the bearing 325 and the parking clamping member 323. In this way, the driven gear set 32 of the present embodiment can prevent foreign substances such as dust from falling into the bearing 325 or falling between the second shaft rod 321 and the bearing 325 or the second bevel gear 322 by means of the dust jacket 327, so as to retain the normal operation of each component.

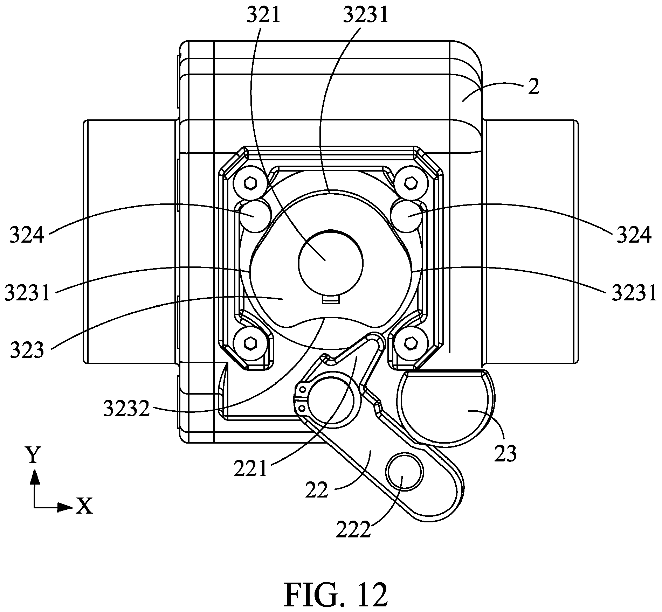

Referring to FIG. 10 and FIG. 12, in addition to the above embodiments, in an embodiment of the present disclosure, the top of the housing 2 may further have a locking pawl 22 and a fixing pin 23. The locking pawl 22 is pivoted to the housing 2, and two ends of the locking pawl 22 respectively have a hook portion 221 and a positioning portion 222. The outer ring periphery of the parking clamping member 323 may have a concave portion 3232, and the concave portion 3232 is located between the two adjacent convex portions 3231. The fixing pin 23 may be combined with the top of the housing 2 to use a head of the fixing pin 23 to spread the locking pawl 22, so that when an outer edge of the locking pawl 22 is abutted to the fixing pin 23, the hook portion 221 of the locking pawl 22 does not extend into a pivoting range of the parking clamping member 323, so as to form an unlocked state.

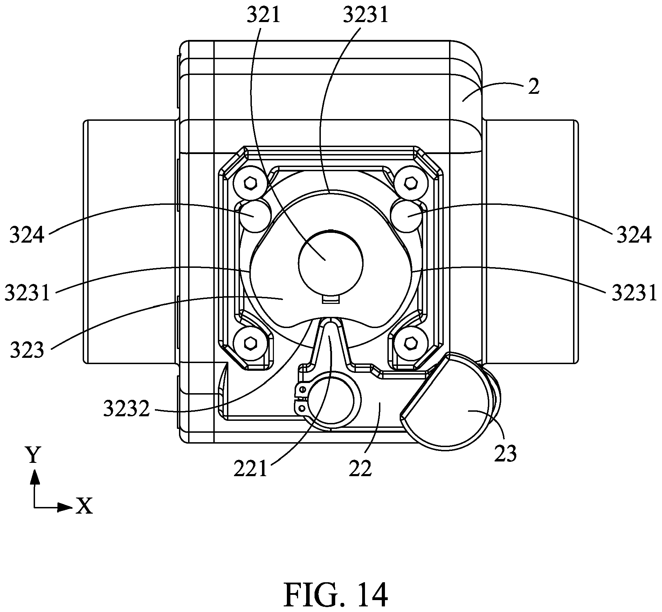

Referring to FIG. 10 and FIG. 14, to switch to the locked state, the fixing pin 23 can be combined with the positioning portion 222 of the locking pawl 22 to make the locking pawl 22 pivot, so that the hook portion 221 of the locking pawl 22 can penetrate into the concave portion 3232 of the parking clamping member 323, thereby limiting the parking clamping member 323 to almost no rotation. In this way, the coupling mechanism of the present embodiment can have a parking function, and enable the vehicle to retain an upright state without tipping over during parking.

While the present invention has been described by means of preferable embodiments, those skilled in the art should understand the above description is merely for describing the invention, and it should not be considered to limit the scope of the invention. It should be noted that all changes and substitutions which come within the meaning and range of equivalency of the embodiments are intended to be embraced in the scope of the invention. Therefore, the scope of the invention is defined by the claims.

## Claims

1. A coupling mechanism, comprising:
a base(1), an end used to pivot to a rear end of a frame(F);
a housing(2), combined and fixed in the base(1); and
a linkage module(3), having two linkage gear sets(31) and two driven gear sets(32), each linkage gear set(31) has a first shaft rod(311) connected with a first bevel gear(312), and each driven gear set(32) has a second shaft rod(321) connected with a second bevel gear(322), the two first bevel gears(312) and the two second bevel gears(322) are all located in the housing(2), each of the first bevel gears(312) simultaneously meshes the two second bevel gears(322), so that the two first bevel gears(312) rotate in opposite directions, the two first shaft rods(311) respectively penetrate out of the base(1) toward two sides, and connect one swing arm(33), and the two second shaft rods(321) are respectively combined with the housing(2).

2. The coupling mechanism according to claim 1, wherein the linkage gear set(31) has a bearing seat(313), and the bearing seat(313) is combined with the base(1) and/or the housing(2), and the first shaft rod(311) penetrates and combines the bearing seat(313).

3. The coupling mechanism according to claim 1, wherein the first shaft rod(311) has a combining portion(314), the linkage gear set(31) has an adapter seat(315) combined with the combining portion(314), and the swing arm(33) combines with the adapter seat(315).

4. The coupling mechanism according to claim 1, wherein the first shaft rod(311) is combined with the first bevel gear(312) by a clamping portion(316), or the first shaft rod(311) is integrally formed and connected with the first bevel gear(312), so that the first shaft rod(311) and the first bevel gear(312) retain the same movement.

5. The coupling mechanism according to claim 1, wherein the base(1) has a reinforcing piece(1 1), and the reinforcing piece(11) extends and combines to the housing(2).

6. The coupling mechanism according to claim 1, wherein a top of the housing(2) is open and covered with a detachable cover(21), the second shaft rod(321) of the driven gear set(32) positioned at the top of the housing(2) penetrates and combines with a parking clamping member(323), and the parking clamping member(323) has three convex portions(3231) that are arranged at intervals, two stopping members(324) are located in the housing(2), and are respectively positioned between any two adjacent convex portions(3231); and after the second shaft rod(321) drives the parking clamping member(323) to rotate, one of the convex portions(3231) of the parking clamping member(323) can be abutted to one of the stopping members(324).

7. The coupling mechanism according to claim 6, wherein the driven gear set(32) positioned at the top of the housing(2) has a bearing(325), the bearing(325) is combined in the housing(2), and the second shaft rod(321) penetrates and combines with the bearing(325).

8. The coupling mechanism according to claim 7, wherein the second shaft rod(321) of the driven gear set(32) positioned at the top of the housing(2) is combined with the second bevel gear(322) by a clamping portion(316), or the second shaft rod(321) is integrally formed and connected with the second bevel gear(322), so that the second shaft rod(321) and the second bevel gear(322) retain the same movement.

9. The coupling mechanism according to claim 7, wherein the driven gear set(32) positioned at the top of the housing(2) has a dust jacket(327), and the second shaft rod(321) penetrates through the dust jacket(327), and the dust jacket(327) is abutted to a ring periphery of the second shaft rod(321) and located between the bearing(325) and the parking clamping member(323).

10. The coupling mechanism according to any of claims 6-9, wherein the top of the housing(2) has a locking pawl(22) and a fixing pin(23), the locking pawl(22) is pivoted to the housing(2), and two ends of the locking pawl(22) respectively have a hook portion(221) and a positioning portion(222), the parking clamping member(323) has a concave portion(3232) located between the two adjacent convex portions(3231); when an outer edge of the locking pawl(22) is abutted to the fixing pin(23), the hook portion(221) of the locking pawl(22) does not extend into a pivoting range of the parking clamping member(323); and when the fixing pin(23) is combined with the positioning portion(222) of the locking pawl(22), the hook portion(221) of the locking pawl(22) penetrates into the concave portion(3232) of the parking clamping member(323).

11. An electric three-wheeled scooter, comprising:
a frame(F), a front end being assembled and combined with a front wheel(T); and
the coupling mechanism as described in any of claims 1-10, a front end of the base(1) being pivoted to the rear end of the frame(F), and two rear wheels(R) are respectively assembled and combined with the two swing arms(33).
